# EUROPÄISCHE PATENTSCHRIFT

(11) **EP 3 956 181 B1**
(45) Veröffentlichungstag und Bekanntmachung des Hinweises auf die Patenterteilung: **07.06.2023**
(21) Anmeldenummer: 20716412.0
(22) Anmeldetag: 26.03.2020
(51) Int. Cl.: B60R 21/231, B60R 21/233

(54) **OPW-LUFTSACK**
OPW AIRBAG
SAC GONFLABLE TISSÉ EN UNE SEULE PIÈCE

(30) Priorität: 03.04.2019 DE 102019002441
(43) Veröffentlichungstag der Anmeldung: 23.02.2022
(73) Patentinhaber: Global Safety Textiles GmbH, 79713 Bad Säckingen (DE)
(72) Erfinder: ALBIEZ, Daniel, 79730 Murg (DE); BECKER, Michael, 79694 Utzenfeld (DE)
(74) Vertreter: Kilian Kilian & Partner
(86) Internationale Anmeldenummer: PCT/EP2020/058564
(87) Internationale Veröffentlichungsnummer: WO 2020/201018

(56) Entgegenhaltungen:
- DE-A1- 19 847 854
- DE-B3-102018 124 099
- US-A1- 2006 043 702
- US-A1- 2007 096 442

## Beschreibung

Die vorliegende Erfindung betrifft einen OPW-Luftsack mit wenigstens drei gewebten Gewebelagen, einer unteren Gewebelage, einer oberen Gewebelage und einer dazwischen angeordneten mittleren Gewebelage.

Sogenannte Far-side airbags, auch Front center airbags genannt, werden beispielsweise im Fahrersitz von Kraftfahrzeugen auf der zum Beifahrer gerichteten Seite angeordnet. Diese Airbags sollen künftig eingesetzt werden, um den im Jahr 2020 voraussichtlich in Kraft tretenden neuen Prüfanforderungen des Euro NCAP gerecht zu werden. Testbeschreibungen hierzu sind beispielsweise im Internet unter "euro-ncap-far-side-test-and-assessment-protocol-v10.pdf" zu finden. Siehe auch "European New Car Assessment Programme" unter www.euroncap.com.

Die oben genannten Airbags können bisher nur sehr aufwändig im sog. Cut, Seal & Sew-Verfahren gefertigt. Dabei werden eine Vielzahl von Gewebestücken aus einer oder mehreren Gewebebahn(en) ausgeschnitten, mit einer Dichtungsmasse beschichtet und kosten- und zeitaufwändig zu Luftsäcken zusammengenäht. Um eine bestmögliche Schutzwirkung der Fahrzeuginsassen gewährleisten zu können, muss ein solcher Luftsack über eine ausgeprägte Formgebung und sehr hohe Steifigkeit im aufgeblasenen Zustand verfügen. Bekannte Luftsäcke für diesen Einsatzzweck stellen aufwändige Lösungen dar und werden heute unter hohem konfektionstechnischem Aufwand hergestellt, indem z. B. aus einem mit Silikon beschichtetem Flachgewebe zwei oder mehrere identische oder teilidentische oder unterschiedliche Fertigungsteile ausgeschnitten werden, randseitig eine Dichtmasse - z. B. in Form einer umlaufenden Raupe - aufgespritzt wird und anschließend die beiden oder mehrere Gewebeteile übereinandergelegt werden, sowie dann die Teile in Klebeverbund gegebracht werden. Zusätzlich werden die Gewebelagen mit einer Naht versehen, um eine ausreichende Festigkeit der Klebenaht zu gewährleisten. Es müssen weitere Komponenten, z.B. Fangbänder, Laschen etc. in einem weiteren Prozessschritt zur Formgebung (mit oder ohne Dichtmasse) angenäht werden. Das Verfahren ist sehr zeit- und kostenintensiv und erfordert zahlreiche manuelle Prozessschritte. Der dem kompletten Modul zur Verfügung stehende Bauraum im Fahrzeugsitz ist jedoch sehr begrenzt. Genähte Far-side airbags bedingen, da die Nähte und mehrere Gewebelagen sehr auftragen, erhöhten Bauraumbedarf.

Die US 2006/043702 A1 lehrt einen Luftsack mit drei Gewebelagen, einer unteren Gewebelage, einer oberen Gewebelage und einer dazwischen angeordneten mittleren Gewebelage verwebt sind. Damit wird ein Seitenairbag mit zwei Kammern gebildet, die beim Aufblasen unter verschiedene Drücke gesetzt werden können.

Aus der EP 3 127 758 A1 ist ein Far-side airbags apparatus bekannt, welcher einen mehrfach genähten zweilagigen Luftsack aufweist, in dessen Innenraum zur Steuerung der beim Aufblasen angestrebten Raumstruktur des sonst zweilagigen Luftsacks verschiedene zu den Außenlagen parallel liegende gezielt bemaßte und positionierte Gewebestücke vernäht sind. Zusätzlich sind gezielte Verbindungsnähte zur Verbindung der beiden äußeren Gewebelagen angebracht. Aus der dortigen Beschreibung geht die mühsame und zeitaufwändige Herstellung von Far-side airbags hervor.

Es ist eine Aufgabe der Erfindung, einen Luftsack vorzuschlagen, mit welchem die aus dem Stand der Technik bekannten Nachteile vermieden oder zumindest stark verringert werden.

Die Aufgabe wird gelöst mit einem OPW-Luftsack gemäß Anspruch 1, nämlich einem OPW-Luftsack mit wenigstens drei gewebten Gewebelagen, einer unteren Gewebelage, einer oberen Gewebelage und einer dazwischen angeordneten mittleren Gewebelage, dadurch gekennzeichnet, dass Kettfäden und Schussfäden der mittleren Gewebelage derart angeordnet sind, dass die Kett- und Schussfäden der mittleren Gewebelage in einem ersten Teilbereich des OPW-Luftsacks aus der mittleren Gewebelage austreten und zwischen der unteren Gewebelage und der oberen Gewebelage vollständig flottieren und in einem zweiten Teilbereich des OPW-Luftsacks in die untere Gewebelage oder die obere Gewebelage eingebunden sind. D. h. die Kettfäden und Schussfäden der mittleren Gewebelage sind in einem ersten Teilbereich vorteilhafterweise nicht miteinander verwebt und bilden damit keine geschlossene Gewebefläche. Der erfindungsgemäße OPW-Luftsack ist vorteilhafterweise ein in einem einzigen Arbeitsgang in einem Stück gewebter (One Piece Woven) Luftsack, welcher fix-und-fertig gewebt aus der Webmaschine kommend, vorteilhafterweise bereits mit allen seinen Funktionsmerkmalen ausgestattet und konfiguriert ist. Um den vorgeschriebenen unterschiedlichen Dichtigkeitsanforderungen zu entsprechen ist er jeweils individuell nur noch mit einem Dichtungsmittel zu versehen. Damit ergibt sich im Gegensatz zu aus dem Stand der Technik bekannten Airbags eine große Kosten- und Herstellungszeitersparnis. Die erfindungsgemäße Konfiguration der im ersten Teilbereich des OPW-Luftsacks vollständig flottierenden Kett- und Schussfäden der mittleren Gewebelage erlaubt zudem ein Kommunizieren der zwischen der unteren Gewebelage und der mittleren Gewebelage angeordneten Kammer und der zwischen der oberen Gewebelage und der mittleren Gewebelage angeordneten Kammer. Aufgrund der erfindungsgemäßen Webkonstruktion, nämlich dass ein Teil der Kettfäden der oberen Gewebelage und ein Teil der Kettfäden der unteren Gewebelage derart angeordnet sind, dass sie diese Gewebelagen jeweils in einem ausgewählten Bereich verlassen und in zweiten Teilbereichen in die mittlere Gewebelage eintreten, entstehen beim Weben diese zwei Kammern. Die beiden Kammern können in einem Aufblasvorgang von einem Generator bzw. Inflator gleichzeitig befüllt werden und bilden bereits einen stabilen Far-side airbag. Ziel ist es, mit dieser Grundkonstruktion die Anforderungen des Euro-NCAP zu erfüllen.

In einer vorteilhaften Ausbildung der Erfindung ist der OPW-Luftsack dadurch gekennzeichnet, dass die obere Gewebelage und die mittlere Gewebelage in ausgewählten Bereichen über X-Tether miteinander verbunden sind. Diese erfindungsgemäße Konfiguration ermöglicht eine zielgenaue Beherrschung der individuell gewünschten Ausformung der oberen Kammer. In den ausgewählten Bereichen, in denen zwei Gewebelagen über X-Tether miteinander verbunden sind, sind die lokale Ausdehnung des Luftsacks und deren Ausmaß beim Aufblasen erfindungsgemäß gewollt eingeschränkt.

In einer weiteren vorteilhaften Ausbildung der Erfindung ist der OPW-Luftsack dadurch gekennzeichnet, dass die untere Gewebelage und die mittlere Gewebelage in ausgewählten Bereichen über X-Tether miteinander verbunden sind. Diese erfindungsgemäße Konfiguration ermöglicht eine zielgenaue Beherrschung der individuell gewünschten Ausformung der unteren Kammer oder beider Kammern. Auch hier gilt, dass in den ausgewählten Bereichen, in denen zwei Gewebelagen über X-Tether miteinander verbunden sind, vorteilhafterweise die lokale Ausdehnung des Luftsacks und deren Ausmaß beim Aufblasen erfindungsgemäß gewollt eingeschränkt werden können.

In wieder einer anderen vorteilhaften Ausbildung der Erfindung ist der OPW-Luftsack dadurch gekennzeichnet, dass er einen vorderen Abschnitt, einen mittleren Abschnitt und einen hinteren Abschnitt aufweist, wobei in dem vorderen Abschnitt ein Generatormund zur Aufnahme eines Generatorsund daran anschließend in einem ersten Teilbereich ein Einströmbereich angeordnet sind, wobei zwischen der mittleren Gewebelage und der unteren Gewebelage im mittleren Abschnitt sich in Richtung des hinteren Abschnitts längs erstreckende Versteifungskammern angeordnet sind, und im hinteren Abschnitt sich dazu quer erstreckende Versteifungskammern angeordnet sind. Mithilfe der erfindungsgemäß vorgesehenen sich längs oder quer erstreckenden Versteifungskammern lassen sich gezielt "härtere" und weniger "harte" Partien des erfindungsgemäßen OPW-Luftsacks bilden und damit die Längs- und/oder Quersteifigkeit einstellen, wobei die Versteifungskammern im OPW-Luftsack richtungsunabhängig angeordnet sein können.

In noch einer anderen vorteilhaften Ausbildung der Erfindung ist der OPW-Luftsack dadurch gekennzeichnet, dass zwischen der mittleren Gewebelage und der oberen Gewebelage, benachbart und parallel zu den sich zwischen der mittleren Gewebelage und der unteren Gewebelage quer erstreckenden Versteifungskammern X-Tetherkolonnen angeordnet sind, deren Breite geringer ist als die Breite der sich quer erstreckenden Versteifungskammern. Diese Konfiguration erlaubt nun erfindungsgemäß eine gesteuerte Krümmung eines Teils des Luftsacks gegenüber einem anderen. Hier lässt sich vorteilhafterweise der hintere Abschnitt gegenüber dem vorderen und mittleren Abschnitt aus der Gewebeebene " in die dritte Dimension" herausheben, indem durch die unterschiedlichen Breiten der X-Tetherkolonnen und der Versteifungskammern beim Aufblasen des Luftsack sich eine Krümmung des hinteren Abschnitts in Richtung der Seite ergibt, auf der X-Tetherkolonnen liegen. Dies wird dadurch verursacht, dass die X-Tetherkolonnen, deren Breite geringer ist als die Breite der sich quer erstreckenden Versteifungskammern, die äußere obere Gewebelage mehr zusammenziehen, als dies die Versteifungskammern auf der Gegenseite tun.

In wieder einer weiteren vorteilhaften Ausbildung der Erfindung ist der OPW-Luftsack dadurch gekennzeichnet, dass er im Bereich zwischen dem mittleren Abschnitt und dem hinteren Abschnitt wenigstens einen sich quer erstreckenden einlagigen Bereich aufweist. Lineare einlagige Bereiche in OPW-Luftsäcken sind immer geeignet dafür, den Luftsack entlang dieser Bereiche leicht zu knicken. Dies führt bei dieser vorteilhaften Weiterbildung der Erfindung dazu, dass eine Knickung ermöglicht wird.

In wieder einer anderen vorteilhaften Ausbildung der Erfindung ist der OPW-Luftsack dadurch gekennzeichnet, dass er im Bereich zwischen dem mittleren Abschnitt und dem hinteren Abschnitt seitliche Ausnehmungen aufweist. Derartige Ausnehmungen sind ebenfalls geeignet, eine Knickung des Luftsacks in diesem Bereich zu erleichtern. Im Einsatzfall, d. h. im Kollisionsfall wird der der erfindungsgemäße Luftsack schlagartig aufgeblasen. Hierbei wird er sich im Thoraxbereich an den Fahrzeuginsassen anlegen. Sein sog. hinterer Abschnitt kann sich erfindungsgemäß entlang der Knicklinie abwinkeln und legt sich auch aufgrund der o. g. Krümmung "in die dritte Dimension" an den Kopf des Fahrzeuginsassen an.

In schließlich noch einer anderen vorteilhaften Ausbildung der Erfindung ist der OPW-Luftsack dadurch gekennzeichnet, dass er auf seinen Außenflächen mit einer Polymerschicht versehen ist. Die Beschichtung mit einer derartigen Dichtmasse erhöht vorteilhafterweise die Luftundurchlässigkeit der Gewebelagen und damit die Formbeständigkeit unter des unter Aufblasdruck stehenden Luftsacks.

Insbesondere ist der Gegenstand der vorliegenden Erfindung im Bereich Far-side bag einsetzbar, da ein solcher in der Richtlinie EuroNCAP2020 gefordert ist.

Zum besseren Verständnis der Erfindung wird diese im Folgenden anhand eines Ausführungsbeispiels unter Zuhilfenahme einer Zeichnung kurz beschrieben. Die Figuren zeigen meistens schematische Draufsicht- oder Schnittdarstellungen.
- Fig. 1: zeigt stark schematisiert einen OPW-Luftsack im nicht aufgeblasenen Zustand von oben.
- Fig. 2: zeigt stark vereinfacht eine Schnittansicht aus Fig. 1 im nicht aufgeblasenen Zustand, wobei in einem ersten Teilbereich des OPW-Luftsacks vollständig flottierende Kett- und Schussfäden der mittleren Gewebelage dargestellt werden.
- Fig. 3: zeigt stark schematisiert den OPW-Luftsack aus Fig. 1 im nicht aufgeblasenen Zustand von unten.
- Fig. 4a: zeigt stark schematisiert und beispielhaft in Schnittansicht einen Abschnitt eines OPW-Luftsacks mit einzelnen Kammern im nicht aufgeblasenen Zustand. Um die tatsächliche Lage der Gewebelagen zueinander darzustellen, sind diese geringfügig auseinandergezogen gezeigt.
- Fig. 4b: zeigt stark schematisiert in Schnittansicht den Abschnitt des OPW-Luftsacks gemäß Fig. 4a, jedoch im aufgeblasenen Zustand und entsprechend kürzer.
- Fig. 4c: zeigt stark schematisiert in Schnittansicht einen hinteren Abschnitt eines OPW-Luftsacks mit X-Tethern und Versteifungskammern im nicht aufgeblasenen Zustand. Um die tatsächliche Lage der Gewebelagen zueinander darzustellen, sind diese geringfügig auseinandergezogen gezeigt.
- Fig. 4d: zeigt stark schematisiert in Schnittansicht den hinteren Abschnitt des OPW-Luftsacks gemäß Fig. 4c mit X-Tethern und Versteifungskammern analog zur Fig. 4c, jedoch im aufgeblasenen Zustand mit gekrümmtem hinteren Abschnitt.
- Fig. 5: zeigt stark schematisiert einen OPW-Luftsack im aufgeblasenen Zustand von der Seite, angelegt an einen Fahrzeuginsassen.

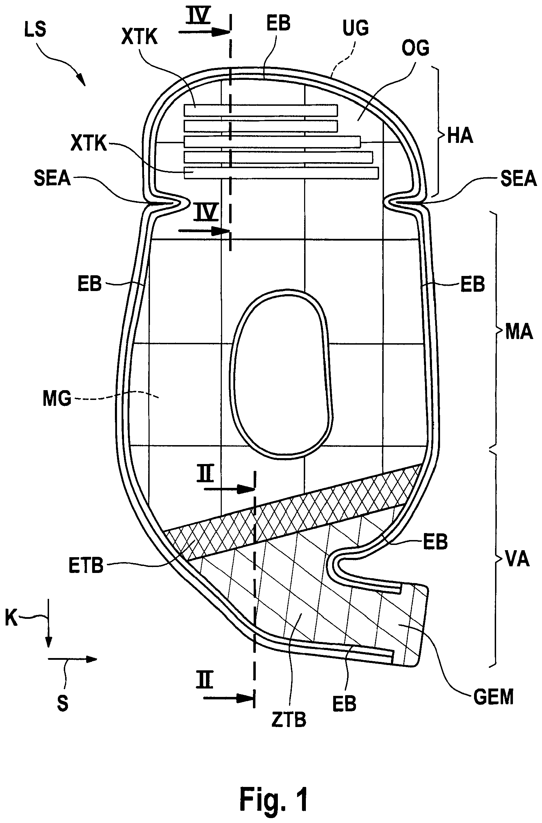

Fig. 1 zeigt stark schematisiert ein Ausführungsbeispiel eines OPW-Luftsack LS im nicht aufgeblasenen Zustand von oben. Der OPW-Luftsack LS ist in einem Stück aus Kett- und Schussfäden gewebt. Die Kettfäden verlaufen in Kettrichtung gemäß Pfeil K. Die Schussfäden verlaufen in Schussrichtung gemäß Pfeil S. Die Verlaufsrichtung ist jedoch nicht bindend. Sie bilden drei gewebte Gewebelagen, eine untere Gewebelage UG, eine obere Gewebelage OG und eine dazwischen angeordnete mittlere Gewebelage MG.

Der OPW-Luftsack LS ist aufgeteilt in einen vorderen Abschnitt VA, einen mittleren Abschnitt MA und einen hinteren Abschnitt HA. Dem Betrachter zugewandt ist die obere Gewebelage OG. Vom Betrachter abgewandt liegt die untere Gewebelage UG. Die mittlere (hier grob kariert angegebene) Gewebelage MG ist in dieser Darstellung nicht zu sehen, da sie sich im Inneren des OPW-Luftsacks LS befindet. Sie erstreckt sich vom hinteren Abschnitt HA über den mittleren Abschnitt MA bis hinein in den vorderen Abschnitte VA. Im vorderen Abschnitt VA liegt ein (nur zu Darstellungszwecken fein rautierter) erster Teilbereich ETB, in welchem die Kett- und Schussfäden der mittleren Gewebelage MG aus dieser austreten und zwischen der unteren Gewebelage UG und der oberen Gewebelage OG vollständig flottieren. Anschließend an den fein rautierten ersten Teilbereich ETB des vorderen Abschnitts VA des OPW-Luftsacks LS liegt ein (nur zu Darstellungszwecken grob rautierter) zweiter Teilbereich ZTB. Am Übergang vom ersten Teilbereich ETB zum zweiten, zweilagig konfigurierten Teilbereich ZTB treten die zuvor im ersten Teilbereich ETB flottierenden Kett- und Schussfäden der mittleren Gewebelage MG in die obere Gewebelage OG

oder in die untere Gewebelage UG ein. Der zweite Teilbereich ZTB ist zweilagig konfiguriert, d. h. er besteht nur aus oberer Gewebelage OG und unterer Gewebelage UG. Hier befindet sich auch der Generatormund GEM, in dessen Bereich ein (nicht gezeigter) Generator G angeschlossen wird.

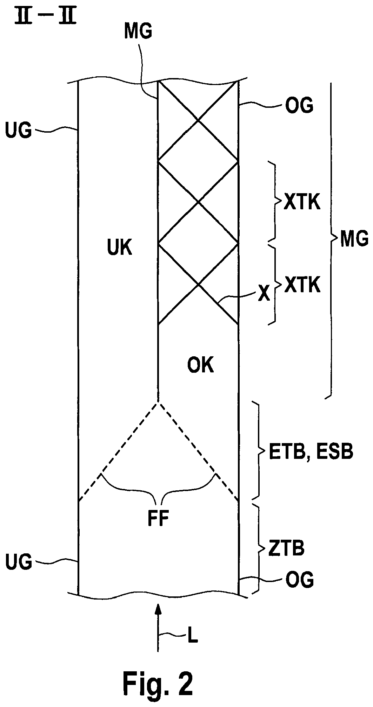

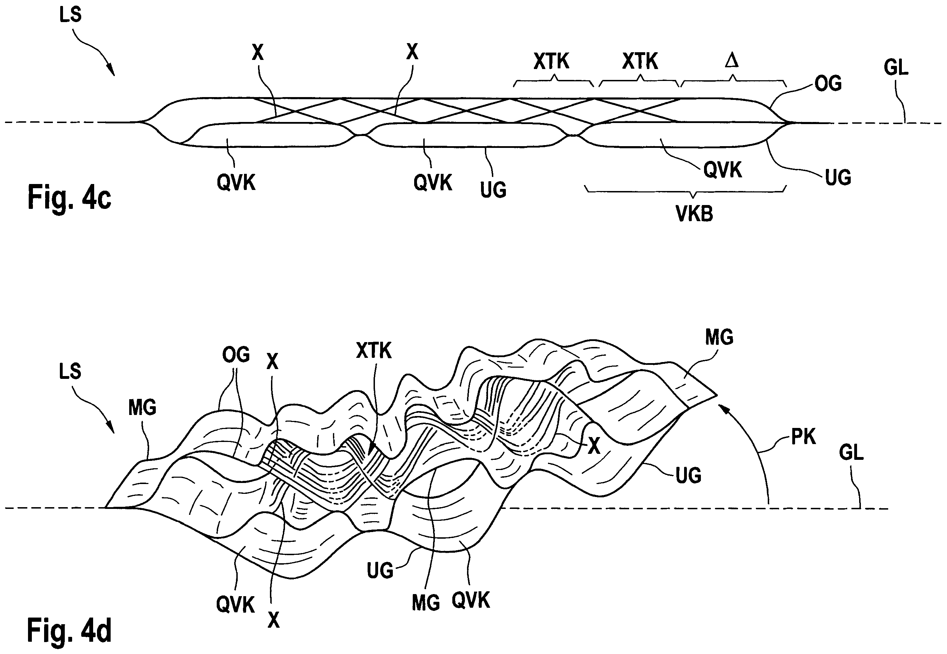

Ein einlagiger Bereich EB umgibt den OPW-Luftsack LS als "Webnaht". Diese sog. Webnaht ergibt sich dadurch, dass in diesem Bereich alle Kett- und Schussfäden in einer Gewebelage zusammengeführt sind. Im vorderen Abschnitt VA ist eine Schnittlinie II - II eingezeichnet. Hierauf wird bei der Beschreibung der Fig. 2 eingegangen. Im hinterer Abschnitt HA ist eine Schnittlinie IV - IV eingezeichnet. Hierauf wird weiter bei der Beschreibung der Fig. 4c und 4d eingegangen. Es soll jedoch auf die durch quer verlaufende längliche Rechtecke angedeuteten X-Tetherkolonnen hingewiesen werden, die zwischen der oberen Gewebelage OG und der mittleren Gewebelage MG angeordnet sind und in der aktuellen Fig. 1 eigentlich nicht zu sehen sind.

Fig. 2 zeigt eine schematische Schnittansicht II - II aus Fig. 1 im aufgeblasenen Zustand von oben, wobei in dem ersten Teilbereich ETB des OPW-Luftsacks LS vollständig flottierende Kett- und Schussfäden FF der mittleren Gewebelage MG dargestellt werden. Man beachte, dass die drei Gewebelagen im nicht aufgeblasenen Zustand eng aneinander liegen, wobei die flottierenden Kett- und Schussfäden FF lose zwischen den beiden Außenlagen OG und UG liegen.

In Fig. 2 sieht man (in der Zeichnung) von oben kommend ein dreilagiges Gewebe, bestehend aus der unteren Gewebelage UG, der oberen Gewebelage OG und der dazwischen angeordneten mittleren Gewebelage MG. Zwischen der oberen Gewebelage OG und der mittleren Gewebelage MG liegt eine obere Kammer OK. Zwischen der mittleren Gewebelage MG und der unteren Gewebelage UG liegt eine untere Kammer UK. Die dazwischen angeordnete mittlere Gewebelage MG endet am ersten Teilbereich ETB und löst sich dort gewissermaßen dadurch auf, dass die Kett- und Schussfäden der mittleren Gewebelage MG in dem ersten Teilbereich ETB nicht verwebt sind, ja dass sie aus der mittleren Gewebelage MG austreten, zwischen der unteren Gewebelage UG und der oberen Gewebelage OG vollständig flottieren und am Übergang in den zweiten Teilbereich ZTB in die untere Gewebelage UG oder in die obere Gewebelage OG eintreten und dann dort eingebunden sind. Eine Besonderheit der erfindungsgemäßen Konfiguration besteht darin, dass im ersten Teilbereich ETB und im zweiten Teilbereich ZTB die mittlere Gewebelage MG nicht mehr existiert.

In der oberen Kammer OK sind beispielhaft einige Tetherkolonnen XTK angedeutet, welche aus sog. X-Tethern X bestehen, die wiederum durch einen gegenseitigen Wechsel von Kett- und oder Schussfäden in die benachbarte Weblage entstehen. Eine Tetherkolonne besteht aus einer Vielzahl in einer Kolonne nebeneinander angeordneter X-Tethern. Der Sinn und Zweck der X-Tether besteht darin, die Aufblähung der jeweiligen Gewebelagen beim Aufblasen zu beschränken bzw. zu steuern. Dies ist dem Fachmann bekannt.

Ausgehend vom Generatormund GEM strömt im Einsatzfall des erfindungsgemäßen OPW-Luftsacks LS das zum Aufblasen des Luftsacks verwendete Medium - im Folgenden nur noch "Aufblasluft" oder "Luft" genannt - aus dem zweilagigen zweiten Teilbereich ZTB durch den ersten Teilbereich ETB, auch Einströmbereich ESB genannt, in welchem Kett- und Schussfäden flottieren, in Richtung der nach dem ersten Teilbereich ETB beginnenden mittleren Gewebelage MG.

Um ein dynamisches Befüllen des Luftsacks LS bzw. der beiden übereinanderliegenden Luftkammern OK und UK zu erreichen, ohne diese zu beschädigen, bedarf es dieses Einströmbereiches ESB, welcher ein möglichst widerstandsarmes Einströmen der Luft ermöglichen soll. Der Einströmbereich ESB ist konstruktionsseitig so aufgebaut, dass die Fäden der mittleren Gewebeebene MG in Kett- und Schussrichtung vollständig flottieren. Es liegt an dieser Stelle somit keine Verwebung der Fäden vor. Sie befinden sich im Einströmbereich ESB sozusagen "lose" im Inneren des Luftsacks LS.

Die Kett- und Schussfäden der mittleren Gewebeebene MG werden dann im zweilagigen zweiten Teilbereich ZTB, in welchem auch der Generator angeschlossen wird, auch wahlweise zu gleichen oder unterschiedlichen Anteilen innenseitig an die obere Gewebelage OG und untere Gewebelage UG angeheftet. Der Einströmbereich ESB bildet sozusagen das Verbindungsstück zwischen dem zweilagigen Generatormund GEM und den Kammern UK und OK des Luftsacks LS.

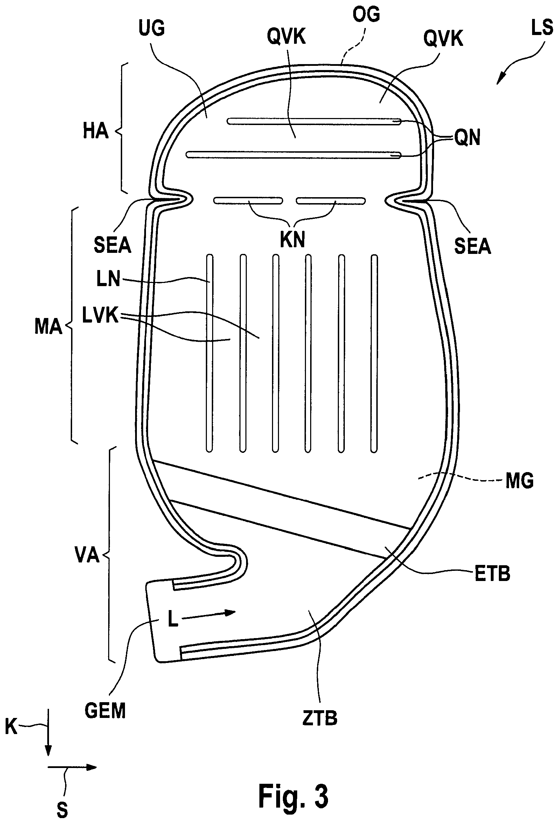

In Fig. 3 ist der erfindungsgemäße OPW-Luftsack LS von der Unterseite her gezeigt. Dem Betrachter ist also die untere Gewebelage OG zugewandt. Vom Betrachter abgewandt liegt die obere Gewebelage UG. Die Lage des ersten Teilbereichs ETB ist zu erkennen. Diese Darstellung dient zunächst der Beschreibung von Versteifungskammern QVK und LVK. Im mittleren Abschnitt MA sind sich in Richtung des hinteren Abschnitts HA längs erstreckende Versteifungskammern LVK angeordnet. Sie liegen zwischen Nähten LN, die als Webnähte zwischen der mittleren Gewebelage MG und der unteren Gewebelage UG angebracht sind. Im hinteren Abschnitt HA sind sich dazu quer erstreckende Versteifungskammern QVK angeordnet. Diese liegen zwischen Nähten QN, die ebenfalls als Webnähte zwischen der mittleren Gewebelage MG und der unteren Gewebelage UG angebracht sind. Beide Kammertypen dienen in Längs- bzw. Querrichtung der Versteifung des OPW-Luftsacks LS im Aufblasfall.

Zwischen dem hinteren Abschnitt HA und dem mittleren Abschnitt MA sind gewebte Knicknähte KN angeordnet, die die mittlere Gewebeebene MG und die obere Gewebeebene OG miteinander verbinden. Unterstützt durch an der Außenkante des OPW-Luftsacks LS angeordnete seitliche Ausnehmungen SEA wird eine Abwinkelung oder Knickung des hinteren Abschnitts HA gegenüber dem mittleren Abschnitt MA ermöglichen. Die Knicknähte KN wirken wie Gelenke.

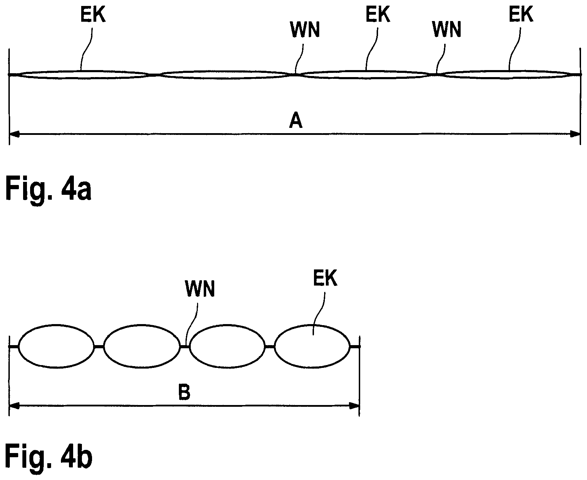

In Fig. 4a ist zur Veranschaulichung der Geometrie beim Aufblasen von OPW-Luftsäcken ein simpler zweilagiger OPW-Luftsack mit einzelnen Kammern EK und Webnähten WN im nicht aufgeblasenen Zustand dargestellt. Er hat die Länge A. Wird er aufgeblasen, siehe Fig. 4b, dann verkürzt er sich auf die Länge B. Dadurch, dass die Kammern EK mit Luft gefüllt werden blähen sie sich auf. Der Luftsack geht "in die dritte Dimension" und wird kürzer.

In Figur 4 c) ist beispielhaft und sehr schematisch - zum leichteren Verständnis von realistischen Maßen abweichend - ein Ausschnitt des erfindungsgemäßen im hinteren Abschnitt HA dreilagig ausgebildeten Luftsacks LS in Schnittansicht IV - IV von Fig. 1 im nicht aufgeblasenen Zustand allerdings aus Darstellungsgründen etwas nach oben und nach unten auseinandergezogen an einer Grundlinie GL orientiert dargestellt. Zwischen der oberen Gewebelage OG und der mittleren Gewebelage MG sind aus X-Tethern gebildete X-Tetherkolonnen XTK mit der Breite XTB angeordnet. Zwischen der mittleren Gewebelage MG und der unteren Gewebelage UG sind Querversteifungskammern QVK mit einer Breite VKB angeordnet. Die Breite XTB der X-Tetherkolonnen XTK ist um ein mit der Breitenbestimmung auswählbares Δ kürzer als die Breite XTB der Querversteifungskammern QVK.

Fig. 4d verdeutlicht nun die sich beim Aufblasen des hier gezeigten OPW-Luftsacks LS ergebende Folge, nämlich dass sich der Luftsack aufgrund des Δ in Richtung des Pfeils PK krümmt. Die Querversteifungskammern QVK verkürzen sich weniger als die X-Tetherkolonnen XTK. Es kommt, wie gezeigt, auf der rechten Seite der Fig. 4d zur Krümmung nach oben. Der erfindungsgemäße OPW-Luftsack LS wird etwas kürzer. Sein rechtes Ende bewegt sich - gesteuert durch die Anordnung und Anzahle der X-Tether gezielt - von der Grundlinie GL nach oben.

In den Fig. 4c und 4d ist auch gut zu erkennen, wie die X-Tether X aus der oberen Gewebelage OG austreten und in die mittlere Gewebelage MG eintreten und umgekehrt. Auch die X-Tetherkolonnen XTK und die x-förmige Verkreuzung der X-Tether sind schematisch dargestellt. Natürlich kann die Anzahl der X-Tether variieren. Hier sind exemplarisch nur einige gezeigt.

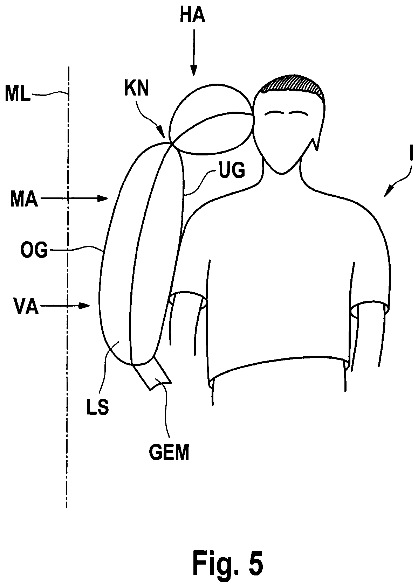

In Fig. 5 ist der erfindungsgemäße OPW-Luftsack im Einsatzfalle, also in der Aufblassituation gezeigt. Der OPW-Luftsack LS ist beispielsweise mit seinem vorderen Bereich VB in der Beckengegend eines Fahrzeuginsassen I angeordnet und aufgeblasen gezeigt.

Mit seinem vorderen Abschnitt VA und seinem mittleren Abschnitt MA legt er sich am Arm und im Brustbereich diesen schützend an den Insassen I an. Gut zu erkennen ist auch, dass der hintere Abschnitt des OPW-Luftsacks LS im Bereich der Knicknaht KN abgeknickt und zum Kopf des Insassen geneigt ist, wobei er diesen von einer angedeuteten Mittellinie ML eines gedachten Fahrzeugs schützend wegschiebt.

### Bezugszeichen

- EB: Einlagiger Bereich
- EK: Einzelne Kammer
- ESB: Einströmbereich
- ETB: Erster Teilbereich
- FF: Flottierende Kett- und Schussfäden
- G: Generator
- GEM: Generatormund
- GL: Grundlinie
- HA: Hinterer Abschnitt
- I: Insasse
- K: Kettrichtung
- KN: Knicknaht
- KOG: Kettfaden der oberen Gewebelage
- KMG: Kettfaden der mittleren Gewebelage
- KUG: Kettfaden der unteren Gewebelage
- L: Pfeil Luftströmung
- LN: Längsnaht
- LS: OPW-Luftsack
- LVK: Versteifungskammer
- MA: Mittlerer Abschnitt
- MG: Mittlere Gewebelage
- ML: Mittellinie
- OG: Obere Gewebelage
- PK: Pfeil Krümmung
- QN: Quernaht
- QVK: Versteifungskammer
- S: Schussrichtung
- SEA: Seitliche Ausnehmung
- SMG: Schussfaden
- UG: Untere Gewebelage
- VA: Vorderer Abschnitt
- WN: Webnaht
- X: X-Tether
- XTK: Tetherkolonne
- ZL: Zweilagiger Bereich
- ZTB: Zweiter Teilbereich

## Patentansprüche

1. Ein in einem Stück gewebter Luftsack (OPW) mit Kettfäden und Schussfäden, die in wenigstens drei gewebten Gewebelagen, einer unteren Gewebelage (UG), einer oberen Gewebelage (OG) und einer dazwischen angeordneten mittleren Gewebelage (MG) verwebt sind, **dadurch gekennzeichnet, dass** die Kett- und Schussfäden der mittleren Gewebelage (MG) in einem ersten Teilbereich (ETB) des OPW-Luftsacks aus der mittleren Gewebelage (MG) austreten und zwischen der unteren Gewebelage (UG) und der oberen Gewebelage (OG) vollständig flottieren und in einem zweiten Teilbereich (ZTB) des OPW-Luftsacks in die untere Gewebelage (UG) oder in die obere Gewebelage (OG) eingebunden sind.

2. OPW-Luftsack nach Anspruch 1, **dadurch gekennzeichnet, dass** die obere Gewebelage (OG) und die mittlere Gewebelage (MG) in ausgewählten Bereichen über X-Tether (X) miteinander verbunden sind.

3. OPW-Luftsack nach Anspruch 1 oder 2, **dadurch gekennzeichnet, dass** die untere Gewebelage (UG) und die mittlere Gewebelage (MG) in ausgewählten Bereichen über X-Tether (X) miteinander verbunden sind.

4. OPW-Luftsack nach einem der vorhergehenden Ansprüche, **dadurch gekennzeichnet, dass** er einen vorderen Abschnitt (VA), einen mittleren Abschnitt (MA) und einen hinteren Abschnitt (HA) aufweist,
wobei in dem vorderen Abschnitt (VA) ein Generatormund (GEM) zur Aufnahme eines Generators (G) und daran anschließend in einem ersten Teilbereich (ETB) ein Einströmbereich (ESB) angeordnet sind,
wobei zwischen der mittleren Gewebelage (MG) und der unteren Gewebelage (UG)
.- im mittleren Abschnitt (MA) sich in Richtung des hinteren Abschnitts (HA) längs erstreckende Versteifungskammern (LVK) angeordnet sind, und
.- im hinteren Abschnitt (HA) sich dazu quer erstreckende Versteifungskammern (QVK) angeordnet sind.

5. OPW-Luftsack nach Anspruch 4, **dadurch gekennzeichnet, dass** zwischen der mittleren Gewebelage (MG) und der oberen Gewebelage (OG), benachbart und parallel zu den sich zwischen der mittleren Gewebelage (MG) und der unteren Gewebelage (UG) quer erstreckenden Versteifungskammern (QVK) X-Tetherkolonnen (XTK) angeordnet sind, deren Breite geringer ist als die Breite der sich quer erstreckenden Versteifungskammern (QVK).

6. OPW-Luftsack nach einem der vorhergehenden Ansprüche, **dadurch gekennzeichnet, dass** er im Bereich zwischen dem mittleren Abschnitt (MA) und dem hinteren Abschnitt (HA) wenigstens einen sich quer erstreckenden im Wesentlichen linearen einlagigen Bereich (EB) aufweist.

7. OPW-Luftsack nach einem der vorhergehenden Ansprüche, **dadurch gekennzeichnet, dass** er im Bereich zwischen dem mittleren Abschnitt (MA) und dem hinteren Abschnitt (HA) seitliche Ausnehmungen (SEA) aufweist.

8. OPW-Luftsack nach einem der vorhergehenden Ansprüche, **dadurch gekennzeichnet, dass** er auf seinen Außenflächen mit einer Polymerschicht versehen ist.

## Claims

1. One-peace woven airbag (OPW) having warp threads and weft threads, which are woven together in at least three woven fabric layers, a lower fabric layer (UG), an upper fabric layer (OG) and a middle fabric layer (MG) arranged therebetween, **characterized in that** the warp and weft threads of the middle fabric layer (MG) emerge from said middle fabric layer (MG) in a first partial region (ETB) of the OPW airbag and float completely between the lower fabric layer (UG) and the upper fabric layer (OG) and are incorporated into the lower fabric layer (UG) or into the upper fabric layer (OG) in a second partial region (ZTB) of the OPW airbag.

2. OPW airbag according to claim 1, **characterized in that** the upper fabric layer (OG) and the middle fabric layer (MG) are joined together in selected regions via X-tethers (X).

3. OPW airbag according to claim 1 or 2, **characterized in that** the lower fabric layer (UG) and the middle fabric layer (MG) are joined together in selected regions via X-tethers (X).

4. OPW airbag according to one of the preceding claims, **characterized in that** it comprises a front portion (VA), a middle portion (MA) and a rear portion (HA), wherein a generator mouth (GEM) for receiving a generator (G) being arranged in the front portion (VA) and adjacent thereto an inflow region (ESB) being arranged in a first partial region (ETB), wherein between the middle fabric layer (MG) and the lower fabric layer (UG)
- stiffening chambers (LVK), extending longitudinally in the direction of the rear portion (HA), being arranged in the middle portion (MA), and
- stiffening chambers (QVK), extending transversely thereto, being arranged in the rear portion (HA).

5. OPW airbag according to claim 4, **characterized in that** X-tether series are arranged between the middle fabric layer (MG) and the upper fabric layer (OG), adjacent and parallel to the stiffening chambers (QVK), extending transversely, between the middle fabric layer (MG) and the lower fabric layer (UG), the width of said series being less than the width of the stiffening chambers (QVK) extending transversely.

6. OPW airbag according to one of the preceding claims, **characterized in that** it comprises at least one substantially linear single-layer region (EB), extending transversely, in the region between the middle portion (MA) and the rear portion (HA).

7. OPW airbag according to one of the preceding claims, **characterized in that** it comprises lateral recesses (SEA) in the region between the middle portion (MA) and the rear portion (HA).

8. OPW airbag according to one of the preceding claims, **characterized in that** it is provided with a polymer layer on its outer surfaces.

## Revendications

1. Coussin gonflable tissé d'une seule pièce (OPW) ayant des fils de chaîne et des fils de trame, qui sont tissés ensemble dans au moins trois couches d'étoffe tissée, une couche d'étoffe inférieure (UG), une couche d'étoffe supérieure (OG) et une couche d'étoffe centrale (MG) disposée entre elles, **caractérisé en ce que** les fils de chaîne et de trame de la couche d'étoffe centrale (MG) émergent de ladite couche d'étoffe centrale (MG) dans une première région partielle (ETB) du coussin gonflable OPW et flottent complètement entre la couche d'étoffe inférieure (UG) et la couche d'étoffe supérieure (OG) et sont incorporés dans la couche d'étoffe inférieure (UG) ou dans la couche d'étoffe supérieure (OG) dans une deuxième région partielle (ZTB) du coussin gonflable OPW.

2. Coussin gonflable OPW selon la revendication 1, **caractérisé en ce que** la couche d'étoffe supérieure (OG) et la couche d'étoffe centrale (MG) sont jointes ensemble dans des régions sélectionnées via des attaches en X (X).

3. Coussin gonflable OPW selon la revendication 1 ou 2, **caractérisé en ce que** la couche d'étoffe inférieure (UG) et la couche d'étoffe centrale (MG) sont jointes ensemble dans des régions sélectionnées via des attaches en X (X).

4. Coussin gonflable OPW selon l'une des revendications précédentes, **caractérisé en ce qu'**il comprend une partie avant (VA), une partie centrale (MA) et une partie arrière (HA), dans lequel une embouchure de générateur (GEM) pour recevoir un générateur (G) est disposée dans la partie avant (VA) et, adjacente à celle-ci, une région d'admission (ESB) est disposée dans une première région partielle (ETB), dans lequel, entre la couche d'étoffe centrale (MG) et la couche d'étoffe inférieure (UG)
- des compartiments de rigidification (LVK), s'étendant longitudinalement dans la direction de la partie arrière (HA), sont disposés dans la partie centrale (MA), et
- des compartiments de rigidification (QVK), s'étendant transversalement à ceux-ci, sont disposés dans la partie arrière (HA).

5. Coussin gonflable OPW selon la revendication 4, **caractérisé en ce qu'**une série d'attaches en X est disposée entre la couche d'étoffe centrale (MG) et la couche d'étoffe supérieure (OG), adjacente et parallèle aux compartiments de rigidification (QVK) s'étendant transversalement, entre la couche d'étoffe centrale (MG) et la couche d'étoffe inférieure (UG), la largeur desdites colonnes étant inférieure à la largeur des compartiments de rigidification (QVK) s'étendant transversalement.

6. Coussin gonflable OPW selon l'une des revendications précédentes, **caractérisé en ce qu'**il comprend au moins une région monocouche pratiquement linéaire (EB), s'étendant transversalement, dans la région entre la partie centrale (MA) et la partie arrière (HA).

7. Coussin gonflable OPW selon l'une des revendications précédentes, **caractérisé en ce qu'**il comprend des évidements latéraux (SEA) dans la région entre la partie centrale (MA) et la partie arrière (HA).

8. Coussin gonflable OPW selon l'une des revendications précédentes, **caractérisé en ce qu'**il est doté d'une couche de polymère sur ses surfaces extérieures.
